## Europäisches Patentamt

(19) **European Patent Office**

**Office européen des brevets**

(11) Veröffentlichungsnummer: **0 044 455**

**A1**

(12) ## EUROPÄISCHE PATENTANMELDUNG

(21) Anmeldenummer: **81105218.2**

(22) Anmeldetag: **04.07.81**

(51) Int. Cl.³: **G 01 S 13/78**

(30) Priorität: **23.07.80 DE 3027823**

(43) Veröffentlichungstag der Anmeldung:
**27.01.82 Patentblatt 82/4**

(84) Benannte Vertragsstaaten:
**DE FR GB IT NL**

(71) Anmelder: **International Standard Electric Corporation**
**320 Park Avenue**
**New York New York 10022(US)**

(72) Erfinder: **Höfgen, Günter**
**Marderweg 8**
**D-7014 Kornwestheim(DE)**

(72) Erfinder: **Ecklundt, Hinrich**
**Lichtenbergstrasse 41**
**D-7140 Ludwigsburg(DE)**

(74) Vertreter: **Thul, Leo, Dipl.-Phys.**
**Kurze Strasse 8 Postfach 300 929**
**D-7000 Stuttgart 30(DE)**

(54) Zweiwegentfernungsmessystem.

(57) Bei dem neuen Entfernungsmeßsystem (DME) ist außer dem bekannten DME-Doppelimpuls und zeitlich danach ein dritter, steilflankiger Impuls vorgesehen. Die Zeitmarken werden vom dritten Impuls abgeleitet. Um zu gewährleisten, daß nicht zufällig vorhandene Impulse als dritter Impuls ausgewertet werden, werden zur Dekodierung und zur Nachlaufsteuerung weiterhin die Doppelimpulse ausgewertet und der dritte Impuls kann nur während einer bestimmten Zeit nach Empfang des Doppelimpulses ausgewertet werden.

Die bei dem Entfernungsmeßsystem vorgesehenen Abfrage- und Antwortstationen können auch mit den vorhandenen DME-Stationen zusammenarbeiten. Es wird dann lediglich auf die erhöhte Meßgenauigkeit verzichtet.

Fig. 3

Patentanwalt
Dipl.-Phys. Leo Thul
Kurze Str. 8, Postfach 300 929
D-7000 Stuttgart 30
Deutschland

Zweiwegentfernungsmeßsystem

## Stand der Technik

Die Erfindung geht aus von einem Zweiwegentfernungsmeßsystem wie im Oberbegriff des Anspruches 1 angegeben. Ein derartiges Zweiwegentfernungsmeßsystem ist in dem Buch "Funksysteme für Ortung und Navigation" von E.Kramar, Verlag Berliner Union GmbH, Stuttgart, 1973 auf den Seiten 147 - 159 beschrieben.

Ein weltweit eingeführtes Zweiwegentfernungsmeßsystem ist das von der ICAO (International Civil Aviation Organization) standardisierte DME (Distance Measuring Equipment). Im Annex 10 zu Aeronautical Telecommunications der ICAO sind die Betriebsdaten für das DME genau festgelegt. Daraus ergibt sich auch eine maximale Bandbreite der Trägerschwingung der DME-Doppelimpulse. Die Form der DME-Doppelimpulse ist ebenfalls im Annex 10 genau festgelegt.

Selbst dann, wenn die Form der Doppelimpulse sowohl in der Abfrage- als auch in der Antwortstation optimal eingehalten wird ergibt sich in der Praxis eine maximale Entfernungsmeßgenauigkeit. Für bestimmte Einsatzzwecke ist es jedoch wünschenswert, diese Entfernungsmeßgenauigkeit weiter zu erhöhen.

## Aufgabe

Es ist Aufgabe der Erfindung, ein Zweiwegentfernungsmeßsystem mit einer hohen Meßgenauigkeit anzugeben.

## Lösung

Die Lösung dieser Aufgabe erfolgt mit den im Anspruch 1 angegebenen Mitteln. Abfrage- und Antwortstation sowie Weiterbildungen hiervon sind in den Unteransprüchen enthalten.

## Vorteile

Die Entfernungsmeßgenauigkeit wird gegenüber dem bekannten DME wesentlich erhöht. Die neuen Abfrage- und Antwortstationen können auch mit den vorhandenen DME-Abfrage- und Antwortstationen zusammenwirken. Es wird hierbei lediglich auf die verbesserte Entfernungsmeßgenauigkeit verzichtet. Dies ermöglicht die Weiterbenutzung vorhandener Einrichtungen.

Es ist besonders vorteilhaft, daß zum Erkennen der Abfrage- und Antwortsignale weiterhin die DME-Dekodierung und der DME-Such- und Nachlaufbetrieb angewandt werden.

## Beschreibung

Die Erfindung wird anhand der Zeichnungen beispielsweise näher erläutert. Es zeigt:

Fig.1    ein Blockschaltbild der bekannten DME-Abfragestation,

Fig.2    ein Blockschaltbild der bekannten DME-Antwortstation und

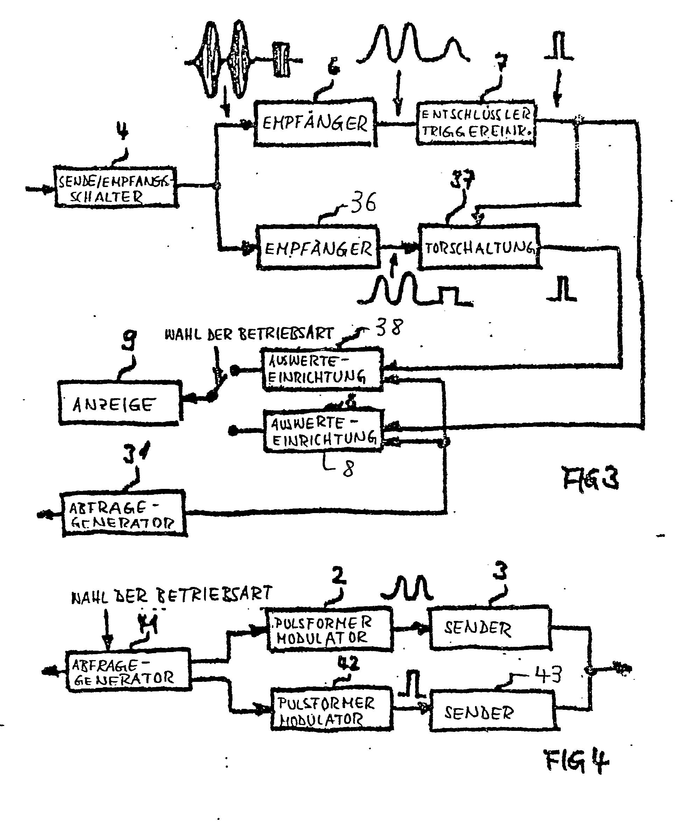

Fig.3,4 Blockschaltbilder von Teilen der neuen DME-Abfragestation.

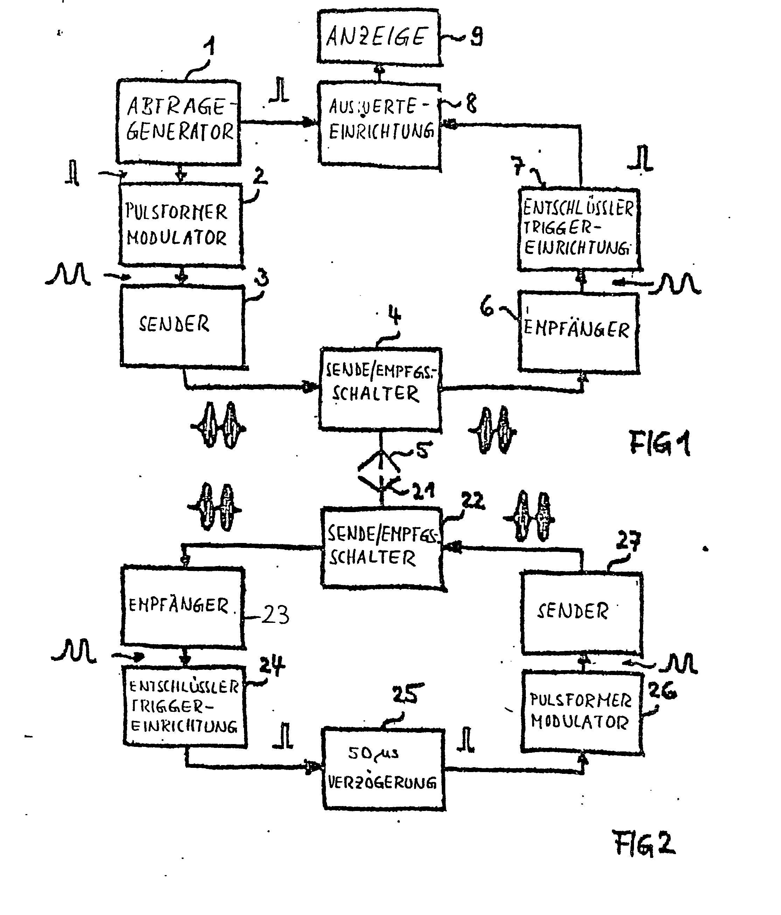

Anhand der Fig.1 wird zunächst die bekannte DME-Abfragestation beschrieben. Ein Abfragegenerator 1 steuert einen Pulsformer und Modulator 2. Das Ausgangssignal des Pulsformers und Modulators 2 ist das Videosignal, das die Einhüllende des DME-Abfragesignals ist. In einem Sender 3 wird die Trägerschwingung des DME-Doppelimpulses moduliert und verstärkt. Die Abstrahlung erfolgt von einer Antenne 5, der das DME-Abfragesignal über einen Sende/Empfangs-Schalter 4 zugeführt wird.

Das von der Antenne 5 aufgenommene DME-Antwortsignal wird über den Sende/Empfangs-Schalter 4 einem Empfänger 6 zugeführt. In einer Einrichtung zur Entschlüsselung und Triggerung 7 wird geprüft, ob die beiden Impulse des Videoausgangssignals des Empfängers den vorgeschriebenen Abstand haben. Nur dann wird das Videosignal für die weitere Auswertung freigegeben. In dieser Einrichtung wird außerdem aus der Vorderflanke des ersten DME-Impulses ein Triggerimpuls abgeleitet, der den Empfangszeitpunkt des DME-Antwortsignals angibt. Dieser Triggerimpuls wird ebenso wie der Triggerimpuls von dem Abfragegenerator 1, der den Zeitpunkt der Abstrahlung des DME-Abfragesignals angibt, zu einer Auswerteeinrichtung 8 geleitet. Die Speicherung des Sendezeitpunkts kann dadurch erfolgen, daß der Triggerimpuls vom Abfragegenerator 1 in der Auswerteeinrichtung 8 einen Zähler startet, der vom Triggerimpuls der Entschlüsselungs- und Triggereinrichtung 7 gestoppt wird, wodurch auch der Empfangszeitpunkt gespeichert wird. Die Auswerteeinrichtung ermittelt aus der Zeitdifferenz von Sende- und Empfangszeitpunkt unter Berücksichtigung der geräteinternen Laufzeiten in der Abfrage- und der Antwortstation die Entfernung zwischen Abfrage- und Antwortstation.

Die Entfernung wird in einer Anzeigeeinrichtung 9 angezeigt.

Anhand der Fig.2 wird die bekannte DME-Antwortstation erläutert.

Das DME-Abfragesignal wird von einer Antenne 21 empfangen und über einen Sende/Empfangsschalter 22 einem Empfänger 23 zugeführt. Die Signalverarbeitung ist ähnlich wie in der DME-

- 4 -

Abfragestation. Das Videoausgangssignal des Empfängers 23 wird in einer Entschlüsselungs- und Triggereinrichtung 24 daraufhin überprüft, ob die Impulse den vorgeschriebenen Abstand haben und es wird ein Triggerimpuls, der den Empfangszeitpunkt angibt, abgeleitet. Der Triggerimpuls wird einer Verzögerungseinrichtung 25 zugeführt, die einen Pulsformer und Modulator 26, der in einem Sender 27 das Sendesignal moduliert, so steuert, daß zwischen dem Empfang des DME-Abfragesignals und der Abstrahlung des DME-Antwortsignals 50 $\mu$s verstreichen. Das DME-Antwortsignal wird vom Sender 27 über den Sende/Empfangsschalter 22 der Antenne 21 zugeführt und von dort abgestrahlt. Wie bereits erwähnt läßt sich mit den bekannten DME-Abfrage- und Antwortstationen nur eine begrenzte Entfernungsmeßgenauigkeit erzielen. Nachfolgend wird erläutert, durch welche Maßnahmen eine erhöhte Entfernungsmeßgenauigkeit zu erzielen ist.

Die Abfrage- und Antwortsignale des neuen Zweiwegentfernungsmeßsystems enthalten zusätzlich zu dem DME-Doppelimpuls einen weiteren, gegenüber den DME-Impulsen breitbandigen Impuls mit steilen Flanken. Die Form des dritten Impulses kann rechteckig oder trapezförmig sein. Auch andere Pulsformen sind möglich. Dadurch, daß er eine steile Vorderflanke aufweist, ist es möglich, Triggerimpulse abzuleiten, die sehr genau den Sende- bzw. den Empfangszeitpunkt angeben. Dieser breitbandige und steile Impuls kann nicht von den bekannten DME-Geräten verarbeitet werden, weil die bei der Signalverarbeitung zur Verfügung stehende Bandbreite zu gering ist.

Nachfolgend werden einige Möglichkeiten angegeben, wie der dritte Impuls realisiert werden kann:

Impulsdauer:              ~ 1 μs

Anstiegszeit:             < 100 ns

Bandbreite:               5 MHz

Abstand vom DME-Doppelimpuls: 200 μs.

Für die Frequenz seiner Trägerschwingung gibt es u.a. folgende Möglichkeiten:

- Festfrequenz im  Sekundärradar  - Frequenzband
- Festfrequenz im C-Band
- Festfrequenz im L-Band
- die jeweilige DME-Betriebsfrequenz
- Verteilung über den gesamten DME-Frequenzbereich (frequency hopping).

Da im Allgemeinen die höhere Entfernungsmeßgenauigkeit nur in geringer Entfernung zur Antwortstation, z.B. innerhalb von 30 km, notwendig ist, reicht es aus, den dritten Impuls mit geringerer Leistung als die DME-Doppelimpulse auszustrahlen. Es ist dann möglich, bei einer bestimmten Entfernung von Hand oder automatisch von der Betriebsart "Doppelimpulse" auf die Betriebsart "Doppelimpulse plus dritter Impuls" umzuschalten. Die jeweilige Betriebsart wird dem Benutzer angezeigt.

Anhand der Fig.4 wird nachfolgend die Erzeugung des neuen Abfragesignals erläutert. Entsprechendes gilt für die Erzeugung des Antwortsignals.

Der Abfragegenerator 41 steuert einerseits weiterhin den Pulsformer und Modulator 2. Der Sender 3 gibt weiterhin, wie bei der bekannten DME-Abfragestation, den DME-Doppelimpuls ab. Andererseits steuert der Abfragegenerator 41 zusätzlich einen weiteren Pulsformer und Modulator 42, der in einem weiteren Sender 43 eine weitere Trägerschwingung, die sich von der Trägerschwingung im ersten Sender 3 unterscheiden kann, moduliert. Der Abfragegenerator 41 steuert den weiteren Pulsformer und Modulator 42, der den steilen dritten Impuls erzeugt, so, daß der dritte Impuls von dem DME-Doppelimpuls den gewünschten Abstand hat. Das von der Antenne der neuen Abfragestation abgestrahlte Abfragesignal setzt sich aus den Ausgangssignalen der Sender 3 und 43 zusammen. Der Abfragegenerator (z.B. ein Rechner) ist so einstellbar, daß er entweder beide Pulsformer und Modulatoren oder nur den zum Erzeugen der Doppelimpulse ansteuert. Die Einstellung des Abfragegenerators kann auch entfernungsabhängig automatisch erfolgen.

Wenn zusätzlich zu dem DME-Doppelimpuls auch der dritte Impuls abgestrahlt wird, dann ist derjenige Zeitpunkt der Sendezeitpunkt, zu dem der dritte Impuls abgestrahlt wird. Diese Information wird zur Auswerteeinrichtung geleitet.

Das von der Abfragestation empfangene Antwortsignal wird vom Sende/Empfangs-Schalter 4 dem ersten Empfänger 6, dem der Entschlüssler und Triggereinrichtung 7 nachgeschaltet ist, und einem zweiten Empfänger 36 zugeführt. Haben der DME-Doppelimpuls und der dritte Impuls gleichfrequente Trägerschwingungen, dann reicht ein gemeinsamer HF-Teil aus. Nachfolgend wird angenommen, daß die Trägerschwingungen dieselbe Mittenfrequenz haben. Folglich werden in beiden Empfängern sowohl der Doppelimpuls als auch der dritte Impuls verarbeitet. Wegen der geringen Bandbreite im ersten Empfänger 6 wird hier der dritte Impuls verzerrt und ist somit für die weitere Auswertung nicht mehr geeignet. Am Ausgang des zweiten Empfängers 36 ist der dritte Impuls unverzerrt vorhanden. Wenn der Entschlüssler 7 erkannt hat, daß der vorhandene Doppelimpuls ein DME-Doppelimpuls ist, dann steuert er eine dem zweiten Empfänger nachgeschaltete Torschaltung 37 so, daß diese nur während der Zeit, während der der dritte Impuls vorhanden sein soll, durchlässig ist. Dadurch wird verhindert, daß zufällig vorhandene Impulse, die nicht der dritte Impuls sind, ausgewertet werden. Der von der Entschlüssler- und Triggereinrichtung 7 abgegebene Triggerimpuls, der, wenn kein dritter Impuls vorhanden ist, den Empfangszeitpunkt des Antwortsignals angibt, wird der Auswerteeinrichtung 8 zugeführt. Der dritte Impuls wird einer weiteren Auswerteeinrichtung 38 zugeführt.

Abhängig davon, welche Betriebsart gewählt ist (nur DME-Doppelimpuls oder DME-Doppelimpuls plus dritter Impuls) wird das von der ersten 8 oder der zweiten 38 Auswerteeinrichtung ermittelte Entfernungsmeßergebnis zur Anzeigeeinrichtung 9 weitergeleitet.

Wie bereits im Zusammenhang mit dem Abfragegenerator 41 erwähnt, kann die Umschaltung auch entfernungsabhängig automatisch erfolgen.

Durch die Torschaltung 37 soll verhindert werden, daß zufällig vorhandene Impulse als dritter Impuls verarbeitet werden. Diese Sicherung kann dadurch weiter verbessert werden, daß nicht nur die zeitliche Lage in Bezug auf den DME-Doppelimpuls sondern auch die Mittenfrequenz der Trägerschwingung geprüft wird. Haben die Trägerschwingungen vom DME-Doppelimpuls und vom dritten Impuls dieselbe Trägerfrequenz, dann wird diese Prüfung so durchgeführt, daß untersucht wird, ob zu dem Zeitpunkt, zu dem am Ausgang des zweiten Empfängers 36 der dritte Impuls vorhanden ist, auch am Ausgang des ersten Empfängers 6 ein (verzerrter) Impuls vorhanden ist. Dieser verzerrte Impuls ist nämlich wegen der Schmalbandigkeit des ersten Empfängers nur vorhanden, wenn der zu untersuchende Impuls die richtige Trägerschwingung hat. Die Prüfung kann durch eine nicht dargestellte UND-Schaltung erfolgen.

Bei unterschiedlichen Trägerfrequenzen von DME-Doppelimpuls und drittem Impuls ist im zweiten Empfänger 36 ein schmalbandiger Bandpaß für die Mittenfrequenz der Trägerschwingung des dritten Impulses vorgesehen. Der Vergleich erfolgt dann anstatt mit dem Ausgangssignal des ersten Empfängers 6 mit dem Ausgangssignal dieses Bandpasses.

Patentansprüche

1. Zweiwegentfernungsmeßsystem, bei dem eine Abfragestation zu einer Antwortstation als Abfragesignale Doppelimpulse abstrahlt, bei dem die Antwortstation, wenn die Doppelimpulse einen vorgegebenen Abstand voneinander haben, nach einer bestimmten Zeit nach Empfang eines Abfragesignals als Antwortsignal einen Doppelimpuls abstrahlt, und bei dem in der Abfragestation aus der Zeitdifferenz zwischen der Abstrahlung eines Abfragesignals und dem Empfang des Antwortsignals unter Berücksichtigung der geräteinternen Laufzeiten die Entfernung zwischen Abfrage- und Antwortstation ermittelt wird, dadurch gekennzeichnet, daß sowohl das Abfrage- als auch das Antwortsignal zusätzlich zu dem Doppelimpuls und in einem vorgegebenen Abstand nach diesem einen dritten Impuls, dessen Anstiegsflanke steiler als die Anstiegsflanken der Impulse des Doppelimpulses ist, enthält, daß der dritte Impuls in der Abfrage- (Fig.1) oder der Antwortstation (Fig.2) nur dann ausgewertet wird, wenn die Abstände der Impulse des Doppelimpulses und des dritten Impulses vom Doppelimpuls die vorgeschriebenen Werte haben, und daß in der Abfragestation zur Bestimmung der Zeitdifferenz zur Ermittlung der Entfernung und in der Antwortstation zur Ermittlung der bestimmten Zeit, nach der das Antwortsignal abgestrahlt wird, die dritten Impulse verwendet werden.

Sm/Ka
21.07.1980

2. Abfragestation mit einer Sende- und einer Empfangseinrichtung
   für ein Zweiwegentfernungsmeßsystem nach Anspruch 1, dadurch
   gekennzeichnet, daß eine erste Einrichtung (41,38) vorgesehen
   ist, die ermittelt, wann der dritte Impuls des Abfragesignals
   abgestrahlt wird und die diesen Zeitpunkt speichert, daß eine
   zweite Einrichtung (7,37) vorgesehen ist, die, wenn die Doppelimpulse des Antwortsignals den vorgeschriebenen Abstand voneinander haben, für eine bestimmte Zeit die Verarbeitung des
   dritten Impulses ermöglicht, daß eine dritte Einrichtung (38)
   vorgesehen ist, die ermittelt, wann der dritte Impuls des
   Antwortsignals empfangen wurde und diesen Zeitpunkt speichert,
   und daß in der Auswerteeinrichtung (38) aus den gespeicherten
   Zeitpunkten und den geräteinternen Laufzeiten die Entfernung
   ermittelt wird.

3. Antwortstation mit einer Sende- und einer Empfangseinrichtung
   für ein Zweiwegentfernungsmeßsystem nach Ansprung 1, dadurch
   gekennzeichnet, daß eine erste Einrichtung vorgesehen ist, die,
   wenn die Doppelimpulse des Abfragesignals den vorgeschriebenen
   Abstand voneinander haben, für eine bestimmte Zeit die Verarbeitung des dritten Impulses ermöglicht, und daß eine zweite
   Einrichtung vorgesehen ist, die den Abstrahlzeitpunkt des
   Antwortsignals so steuert, daß zwischen dem Empfang des dritten
   Impulses des Abfragesignals und der Abstrahlung des dritten
   Impulses des Antwortsignals eine vorgegebene Zeitspanne liegt.

4. Abfrage- oder Antwortstation nach Anspruch 2 oder 3, dadurch
   gekennzeichnet, daß die bestimmte Zeit festgelegt ist durch
   ein Zeittor, das von dem Doppelimpuls den vorgeschriebenen
   Abstand hat.

5. Abfrage- oder Antwortstationnach Anspruch 2, 3 oder 4 dadurch
   gekennzeichnet, daß eine weitere Einrichtung vorgesehen ist, die prüft, ob die Mittenfrequenz der Trägerschwingung des dritten Impulses den vorgeschriebenen Wert hat, und die die weitere Verarbeitung des dritten Impulses nur dann ermöglicht, wenn der vorgeschriebene Wert vorhanden ist.

6. Abfrage- oder Antwortstation nach Anspruch 2 oder 3 dadurch gekennzeichnet, daß die Abfrage- und die Antwortstation an sich bekannte DME-Stationen sind, die so erweitert sind, daß die dritten Impulse für das Abfrage- und das Antwortsignal erzeugt und verarbeitet werden können.

0044455

ANZEIGE ~9

ABFRAGE GENERATOR 1

AUSWERTE-EINRICHTUNG ~8

PULSFORMER MODULATOR 2

ENTSCHLÜSSLER TRIGGER-EINRICHTUNG 7

SENDER 3

SENDE/EMPFGS-SCHALTER 4

EMPFÄNGER 6

5

FIG 1

21

SENDE/EMPFGS-SCHALTER 22

EMPFÄNGER 23

SENDER 27

ENTSCHLÜSSLER TRIGGER-EINRICHTUNG 24

50 µs VERZÖGERUNG 25

PULSFORMER MODULATOR 26

FIG 2

FIG 3

FIG 4

Europäisches
Patentamt

**EUROPÄISCHER RECHERCHENBERICHT**

**0044455**
Nummer der Anmeldung

EP 81 10 5218

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 870 993 (A.D. BIAGI et al.)<br><br>* Spalte 1, Zeile 41 - Spalte 2, Zeile 6; Spalte 3, Zeile 48 - Spalte 4, Zeile 10; Figuren 1,4 und 5 *<br><br>-- | 1,2,6 |
| | DE - A - 1 931 963 (BENDIX)<br><br>* Seite 4, Zeile 11 - Seite 6, Zeile 16; Figur 1 *<br><br>-- | 1 |
| | FR - A - 2 306 454 (INTERNATIONAL STANDARD ELECTRIC CORP.)<br><br>* Seite 12, Zeile 3 - Seite 13, Zeile 26; Seite 14, Zeile 28 - Seite 16, Zeile 14; Figuren 5,6,10 und 13 *<br><br>& US - A - 4 010 465<br>& DE - A - 2 613 542<br><br>-- | 1,3,4,6 |
| | DE - A - 2 746 776 (STANDARD ELEKTRIK LORENZ)<br><br>* Seite 12, Zeile 20 - Seite 13, Zeile 23 und Figuren 4, 5 *<br><br>-- | 1 |
| | US - A - 3 742 496 (M.L. JEZO)<br><br>* Spalte 1, Zeilen 9-55 und Figur 1 *<br><br>------- | 1 |

**KLASSIFIKATION DER ANMELDUNG** (Int. Cl.³)

G 01 S 13/78

**RECHERCHIERTE SACHGEBIETE** (Int. Cl.³)

G 01 S

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 31.08.1981 | MARCHAU |

EPA form 1503.1   06.78